Europäisches Patentamt

(19) European Patent Office

Office européen des brevets

(11) Numéro de publication: **0 085 605**
**B1**

(12) **FASCICULE DE BREVET EUROPEEN**

(45) Date de publication du fascicule du brevet:
09.04.86

(51) Int. Cl.⁴: **B 25 J 15/02**, B 25 J 19/00

(21) Numéro de dépôt: 83400153.9

(22) Date de dépôt: 21.01.83

(54) Dispositif de préhension à mesure d'effort à structure articulée possédant plusieurs degrés de liberté intercalée entre la plaque et son support.

(30) Priorité: 28.01.82 FR 8201326

(43) Date de publication de la demande:
10.08.83 Bulletin 83/32

(45) Mention de la délivrance du brevet:
09.04.86 Bulletin 86/15

(84) Etats contractants désignés:
BE CH DE GB IT LI NL SE

(56) Documents cités:
DE - A - 2 636 473
FR - A - 2 375 962
FR - A - 2 416 094
US - A - 3 921 445

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Mouhamed, Mayez Al, c/o Moktar, Al Assaad Talkalakh (SY)**
Inventeur: **Csakvary, Etienne, 11, Square du Dauphiné, F-78310 Maurepas (FR)**
Inventeur: **De Cosnac, Bertrand, 11 Bis, Avenue Mac-Mahon, F-75017 Paris (FR)**
Inventeur: **Noel, Jean-Paul, 22 Bis, rue des Grillons, F-92290 Chatenay Malabry (FR)**

(74) Mandataire: **Mongrédien, André et al, c/o BREVATOME 25, rue de Ponthieu, F-75008 Paris (FR)**

# Description

La présente invention a pour objet on dispositif de préhension à mesure d'effort à structure articulée intercalée entre la plaque de contact et son support.

Les manipulateurs sont des dispositifs mécaniques qui permettant de remplacer la main de l'homme pour effectuer certains opérations.

Ils s'appliquant par exemple à la protection d'un opérateur contre l'atmosphère radioactive contenue dans une enceinte. Les gestes de l'opérateur, sur un manipulateur-maître situé à l'extérieur de l'enceinte, derrière une paroi de protection, sont reproduits par le manipulateur situé à l'intérieur de l'enceinte.

Une autre application des manipulateurs est de remplacer la main d'oeuvre par exemple pour des opérations répétitives.

Cependant, dans tous les cas d'application, la précision que l'on peut obtenir à l'extrémité du manipulateur est limitée par les imperfections de sa réalisation mécanique d'une part, et d'autre part par les capacités de l'opérateur lui-même lorsqu'un manipulateur-maître est commandé par un opérateur.

Si l'on souhaite par exemple introduire une goupille dans un alésage, il est nécessaire de l'amener exactement dans l'axe de l'alésage. Si cette condition n'est pas réalisée, on risque de détériorer la paroi de l'alésage ou la goupille que l'on veut introduire. Or, comme on l'a rappelé, la précision d'un manipulateur ne permet pas une précision suffisante pour obtenir un alignement parfait de la pièce à insérer avec l'alésage.

Afin de surmonter cette difficulté, on a réalisé des dispositifs de préhension à mesure d'effort. Ces dispositifs permettent de mesurer les efforts qui s'exercent sur l'objet qui est manipulé et s'apportant à son déplacement, de comparer la valeur de cet effort à une valeur de consigne déterminée en fonction de l'opération à réaliser, et de corriger la position du manipulateur en fonction de l'écart entre la valeur de l'effort mesuré et la valeur de consigne. Par exemple, dans le cas cité plus haut de l'insertion d'une goupille dans un alésage, on doit avoir un effort nul selon deux axes perpendiculaires à l'axe de l'alésage. L'effort selon l'axer de l'alésage n'est pas nul, mais il doit rester inférieur à une valeur déterminée en fonction de divers paramètres tels que l'état de surface de l'alésage et celui de la goupille, ou le serrage des deux pièces. Le manipulateur qui porte la pièce à insérer se repositionne donc jusqu'à ce que l'effort mesuré selon deux directions perpendiculaires à l'axe de l'alésage soit nul et l'effort selon cet axe inférieur à la valeur de consigne. A partir de ce moment, l'opération d'insertion se poursuit. Si à un instant quelconque, l'un des efforts venait à dépasser la valeur de consigne, l'insertion s'arrêterait. Le manipulateur se repositionnerait, et ainsi de suite.

On connaît par exemple selon l'art antérieur une pince dont l'axe principal est relié à une croix dont les extrémités sont piégées par une pièce circulaire solidaire du manipulateur. Les extrémités de la croix sont constituées par des boules déformables qui jouent le rôle de détecteurs de force. La force qui s'exerce sur la pince déforme ces boules. On en déduit une information relative à la force. Cette information est ensuite utilisée pour modifier la position du manipulateur. Le document US—A—3921445 (Hill et al.) décrit un dispositif de préhension de ce type. Il comporte une pince dont les machoires 29 et 30 sont fixées aux extrémités de biellettes parallèles 58 à 60. Deux de ces biellettes sont solidaires de roues dentées 50 et 52 susceptibles d'être entraînées dans les deux sens de rotation par un moteur réversible 20.

L'ensemble formé par les machoires, les biellettes et les roues dentées 50, 52 est monté sur un support 22. Un anneau 18 est fixé au support 22 par des vis 24. Plusieurs pièces de couplage élastiques 26, fixées d'une part à l'anneau 18 et d'autre part au support 10, fixé au manipulateur 8, établissent une liaison élastique entre ces deux pièces. Des moyens sont prévus pour détecter la déformation des moyens de couplage élastiques. Par exemple, selon une réalisation, ces moyens sont constitués par quatre éléments $25_1$ à $25_4$ dans lesquels sont percés des trous de passage de la lumière. Certains trous de passage comportent d'un côté une source lumineuse et de l'autre côté des moyens de détection de la lumière. Des axes 84 solidaires du support 10 transmettent le mouvement relatif de la pièce 10 par rapport à la douille 18 aux éléments 25. La quantité de lumière qui passe à travers les passages est fonction des forces et des couples exercés.

Cependant, un dispositif de préhension à mesure d'effort de ce type comporte plusieurs inconvénients.

Le centre de prise, c'est-à-dire le point situé entre les deux machoires qui est équidistant du centre géométrique de ces dernières, est éloigné des moyens de couplage élastiques. En conséquence, ces moyens de couplage sont sensibles à la somme des poids de la pince et de l'objet manipulé, alors qu'il serait souhaitable qu'ils ne soient sensibles qu'aux efforts exercés sur l'objet.

Un deuxième inconvénient est que les moyens de couplage élastiques délivrent des informations couplées qui ne permettent pas d'obtenir directement sans calculs complexes les forces et les couples exercés sur l'objet selon trois axes orthogonaux. La pince peut être orientée selon une grande variété de positions, en fonction des degrés de liberté qu'elle comporte. L'interprétation des informations délivrées par le dispositif détecteur de force devra tenir à chaque instant compte de l'orientation de cette pince. Il en résulte un calcul très complexe.

Un troisième inconvénient réside dans le fait que les moyens de couplage constituent une structure rigide qui ne permet pas un débattement de l'objet manipulé et par conséquent une certaine souplesse et une certain adaptabilité. Ce dispositif ne permet donc que des applications restreintes.

Enfin, l'information délivrée par les moyens de couplage est influencée par la force de serrage de la pince. En effet, lorsque l'objet est serré, le couple exercé par la tige 32 et le pignon 34 est transmis au support 22. Ce couple est équilibré par les moyens de couplage élastiques. On ne peut donc déduire directement un effort extérieur exercé sur l'objet sans tenir compte de cette force de serrage, elle-même difficile à déterminer.

L'invention a pour objet un dispositif de préhension à mesure d'effort qui remédie à ces inconvénients et qui, plus précisément, permet de délivrer une information qui permet de déterminer directement sans traitement complexe l'intensité de l'effort exercé sur l'objet selon chaque degré de liberté. Un objet peut être déplacé selon six degrés de liberté, trois degrés de liberté rotatifs, et trois degrés de liberté prismatiques. Un degré de liberté rotatif est réalisé par un pivotement, un degré de liberté prismatique par une translation. Dans la suite du texte, l'expression "degré de liberté" désignera donc une translation ou une rotation.

Bien qu'un dispositif de préhension comportant six degrés de liberté soit souhaitable afin de pouvoir décomposer les forces et les couples exercés sur l'objet à manipuler selon trois axes orthogonaux, on peut se contenter en pratique d'un nombre de degrés de liberté plus réduit. Cela permet une réalisation plus simple qui donne cependant un fonctionnement satisfaisant et permet d'effectuer un grand nombre d'opérations courantes.

Plus précisément, le dispositif de préhension à mesure d'effort de l'invention se caractérise en ce que chaque doigt comporte un support, un axe fixé au support et présentant un axe géométrique perpendiculaire audit support, un palier monté de manière pivotante sur l'axe, un flasque solidaire du palier, une table mobile en translation par rapport au flasque parallèlement au plan de ce flasque et une plaque de contact adaptée à entrer en contact avec un objet à manipuler et montée de manière pivotante par rapport à la table mobile autour d'un axe perpendiculaire à l'axe géométrique de l'axe fixé au support, un premier capteur de mesure de déplacement interposé entre ledit support et ledit palier pour délivrer une information liée au mouvement de rotation dudit palier autour de l'axe de support, un second capteur de mesure de déplacement interposé entre ledit flasque et la table mobile pour délivrer une information liée au mouvement relatif de translation de ladite table mobile par rapport au flasque, et un troisième capteur de mesure de déplacement interposé entre ladite table et ladite plaque de contact pour délivrer l'information liée au mouvement de rotation de ladite plaque de contact autour de son axe.

Les avantages d'un tel dispositif sont les suivants:

Le centre de prise est aussi proche que possible des moyens de couplage élastique. En conséquence, ces moyens de couplage ne sont pas soumis au poids de la pince, mais seulement aux efforts exercés sur l'objet manipulé. Ceci facilite le traitement du signal délivré par les capteurs, étant donné qu'il est inutile de tenir compte du poids de la pince et de son orientation. En outre, cela augmente la sensibilité de la mesure.

Selon l'invention, tous les capteurs, à l'exception dudit second capteur, délivrent une information qui est découplée, c'est-à-dire une information qui est liée exclusivement au mouvement de la structure articulée selon ce degré de liberté. En conséquence, les forces et les couples exercés sur l'objet selon trois axes orthogonaux peuvent être obtenus directement, sans calculs complexes ou traitement supplémentaire, et ceci indépendamment de l'orientation de la pince.

L'information délivrée par le second capteur peut être facilement découplée par des moyens électroniques simples.

De plus, l'information délivrée n'est pas influencée par la force de serrage de la pince, car tous les mouvements de la structure articulée se font dans un plan perpendiculaire à la direction de cette force de serrage. En conséquence, cette force n'intervient pas dans le traitement des signaux délivrés par les capteurs, ce qui constitue une simplification.

Le dispositif de préhension de l'invention permet ainsi d'effectuer une opération quelconque telle que le poser, l'insertion, l'extraction etc. Il peut s'adapter à un manipulateur à transmission réversible ou non.

De préférence, les capteurs interposés entre le support et le palier, le flasque et la table mobile, la table mobile et la plaque de contact, respectivement, sont constitués par des caoutchoucs capteurs qui délivrent une information liée à leur déformation.

De préférence encore, deux caoutchoucs capteurs sont interposés entre le support et le palier, le flasque et la table mobile, la table mobile et la plaque de contact, respectivement, les deux caoutchoucs capteurs étant opposés par rapport au déplacement dudit palier, de la table mobile et de la plaque de contact, respectivement, et fournissant un signal différentiel.

Selon une autre réalisation, le dispositif de préhension comporte un quatrième degré de liberté, ce degré de liberté étant constitué par une translation selon un axe (Z'1, Z'2) parallèle à l'axe Z et situé entre la translation d'axe $Y_1$, $Y_2$ et la rotation autour de l'axe $X_1$, $X_2$, ce quatrième degré de liberté étant constitué par deux glissières d'axe perpendiculaire à l'axe de rotation $X_1$, $X_2$ et disposées entre la table mobile et le flasque, un quatrième, capteur de mesure de déplacement étant interposé entre lesdites deux flissières pour délivrer une information liée au déplacement d'une glissière par rapport à l'autre.

Dans ces deux réalisations particulières, le mouvement de translation selon l'axe Y est couplé linéairement avec l'angle $\Delta_z$ (angle de rotation de la plaque de contact autour de l'axe Z). Pour découpler cette translation, on retire, au signal fourni par le capteur, la quantité L · Δ, L étant la distance du centre de prise C à l'axe situé dans le plan de la pince et perpendiculaire à son axe principal (le centre de prise est constitué par le centre de l'objet à manipuler).

De préférence, les capteurs de mesure de déplacement associés à chaque degré de liberté sont constitués par des caoutchoucs conducteurs qui délivrent une information liée à leur déformation.

De préférence également, deux caoutchoucs conducteurs sont associés à chaque degré de liberté, les deux caoutchoucs étant placés de part et d'autre par rapport au déplacement du degré de liberte et fournissant un signal différentiel.

D'autres particularités et avantages de l'invention apparaîtront encore à la lecture de la description qui suit, donnée à titre indicatif et nullement limitatif, d'un exemple de réalisation de l'invention fait en référence aux figures annexées, sur lesquelles:

— la figure 1 représente une vue d'un organe de préhension sans mesure d'effort;
— la figure 2 représente une vue schématique d'un organe de préhension à mesure d'effort selon l'invention;
— la figure 3 est une vue en perspective d'un mode de réalisation d'un organe de préhension à mesure d'effort qui comporte trois degrés de liberté;
— les figures 4 à 6 représentent respectivement une vue en perspective et deux vues en coupe du mode de réalisation comportant trois degrés de liberté représenté sur la figure 3;
— la figure 7 est une vue schématique d'un autre mode de réalisation qui comporte un quatrième degré de liberté.

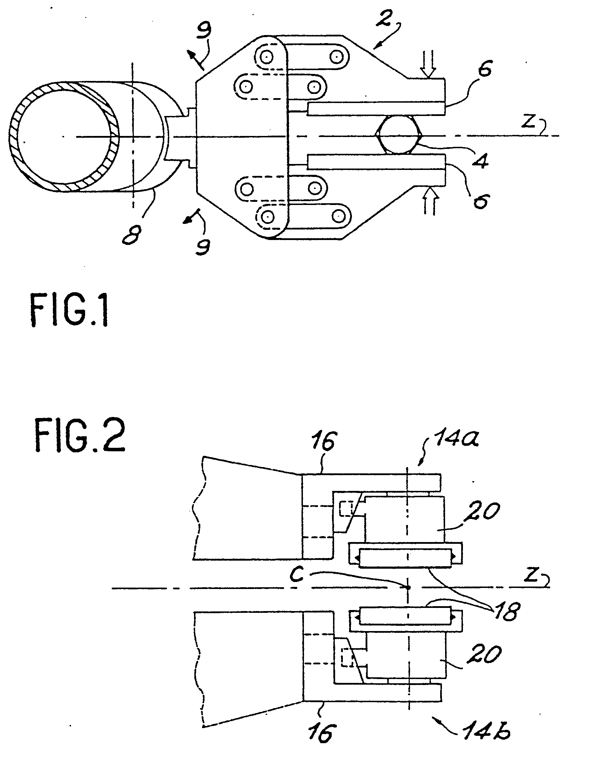

Sur la figure 1, on a représenté une vue schématique d'une pinece à mâchoires parallèles qui serre un objet, ici une vis 4, entre les mâchoires 6. La pince est située à l'extrémité du manipulateur 8 qui permet de la déplacer selon un certain nombre de directions, par exemple en rotation selon le sens des flèches 9.

Toutefois, le fait que la pince 2 ne comporte pas de dispositif de mesure des efforts exercés sur la vis 4 ne permet pas d'effectuer certaines opérations. En effet, la précision avec laquelle on peut manipuler la vis 4 est limitée par la précision du manipulateur 8 et celle de la pince 2. C'est pourquoi, pour effectuer une opération qui requiert un positionnement précis de la vis 4 par rapport au filetage, il est nécessaire de mesurer les efforts qui s'exercent sur cette vis afin de repositionner la pince en fonction de ces informations. Le dispositif de préhension de l'invention représenté sur la figure 2 permet d'atteindre ce résultat. Il se compose de deux doigts 14a et 14b déplaçables pour serrer l'objet à manipuler. Chaque doigt se compose d'un support rigide 16, qui est déplaçable au moyen de moteur électriques, et d'une plaque de contact 18 qui vient au contact de l'objet à manipuler lorsque

l'on rapproche les supports rigides 16. Entre le support 16 et la plaque 18 d'un doigt se trouve une structure articulée 20 possédant plusieurs degrés de liberté. Un capteur de mesure des déplacements est associé à chacun de ces degrés de liberté. La plupart de ces capteurs délivrent une information qui est liée seulement au mouvement de la structure articulée selon ce degré de liberté.

Un degré de liberté peut être constitué soit par une translation qui est réalisée par une glissière, soit par une rotation. Quel que soit le cas, l'amplitude du mouvement de translation ou de rotation est limitée au maximum, afin d'influencer le moins possible le fonctionnement de la pince.

L'axe Z est l'axe principal de la pince. Le point C, situé sur l'axe Z, désigne le centre de prise. Il est situé entre les deux plaques de contact 18, au niveau du centre géométrique de chacune de ces dernières.

La structure articulée 20 peut comporter jusqu'à six degrés de liberté, c'est-à-dire trois degrés de liberté en rotation et trois degrés de liberté en translation. On obtient ainsi une décomposition complète des efforts et des couples exercés sur l'objet manipulé selon trois axes orthonormés.

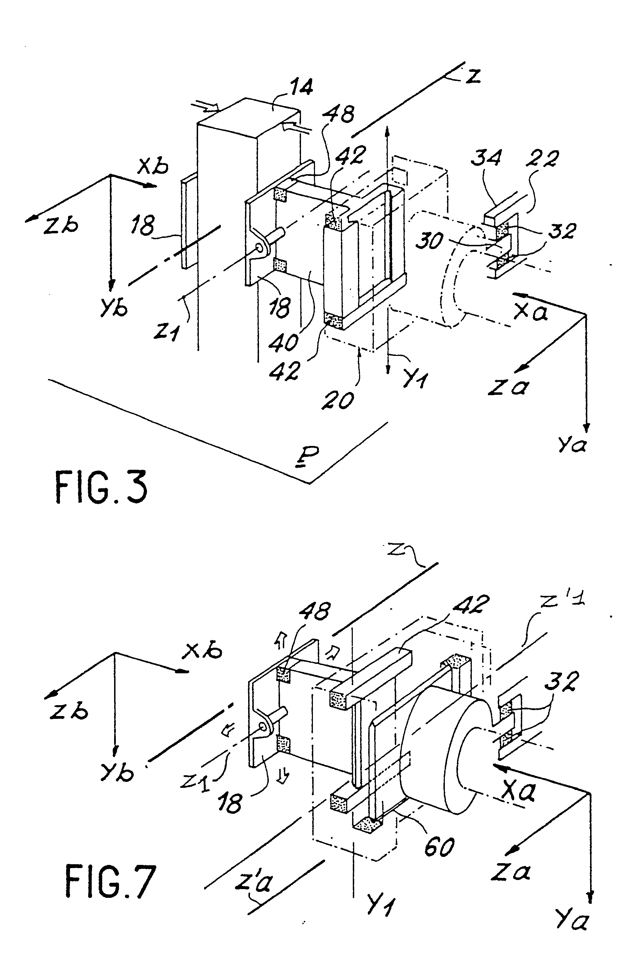

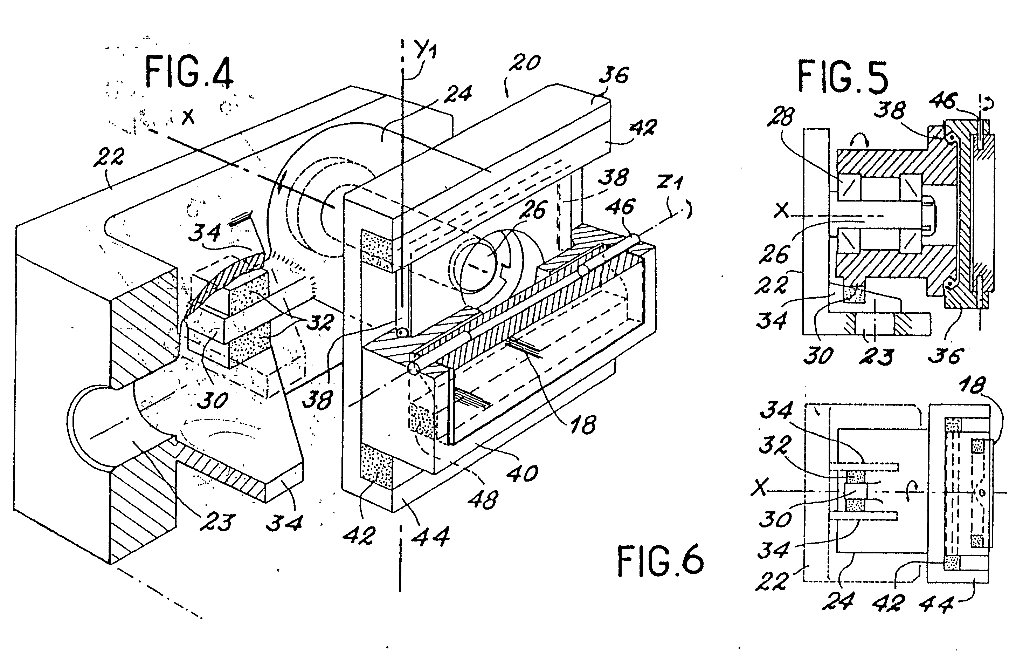

Toutefois, en pratique, pour des opérations telles que l'insertion, l'extraction, le vissage, le poser, il n'est pas nécessaire de mesurer ces efforts de manière aussi complète. On peut se contenter d'un nombre plus réduit de degrés de liberté, par exemple trois. Un exemple de réalisation d'un tel dispositif a été représenté schématiquement en perspective sur la figure 3. La réalisation détaillée de ce dispositif est montrée sur les figures 4 à 6.

Sur la figure 3, on a désigné par Z l'axe principal de la pince. Cette pince comporte deux doigts qui se déplacent en restant parallèles à l'axe Z. On décrira seulement l'un de ces doigts, étant entendu que les deux doigts sont symétriques, et que la description faite ci-dessous s'applique à chacun deux.

On définit pour chaque doigt un trièdre tri-rectangle XYZ. Pour le doigt, 14a, le trièdre tri-rectangle porte les indices $a$. De même, pour le doigt 14b, le trièdre tri-rectangle porte les indices $b$. Les axes $Z_a$ et $Z_b$ sont parallèles à l'axe Z. Ils déterminent le plan de la pince P. Les axes $X_a$ et $X_b$ sont situés dans le plan de la pince P et perpendiculaires à l'axe Z. Les axes $Y_a$ et $Y_b$ sont perpendiculaires au plan de la pince P.

L'objet à manipuler est disposé entre les deux doigts. Il est enserré par deux plaques de contact 18. La structure articulée 20 est intercalée entre la plaque 18 et le support rigide (non représenté) d'axe $Z_a$. De la même manière, le support du deuxième doigt possède un axe $Z_b$.

La structure articulée 20 comporte trois degrés de liberté. Ce sont deux rotations et une translation. La première rotation, en partant de la plaque de contact 18, est une rotation autour d'un axe $Z_1$ parallèle à l'axe Z.

Les axes $Z_1$ et $Z_2$ sont situés dans le plan P lorsqu'aucun effort n'est exercé sur les plaques de contact 18. Lorsqu'un effort est exercé, ces axes se déplacent et peuvent selon le cas rester dans le plan P ou non. Cependant, les déformations de la structure articulée restent faibles dans tous les cas et les axes $Z_1Z_2$ restent grosso modo parallèles à l'axe Z.

Le deuxième degré de liberté est une translation selon un axe $Y_1$ perpendiculaire au plan P lorsqu'aucun effort ne s'applique sur la plaque de contact 18. Toutefois, le remarque faite en ce qui concerne le degré de liberté rotatif autour des axes $Z_1Z_2$ s'applique également. Par conséquent, au cours du fonctionnement de la pince, les axes $Y_1$, respectivement et $Y_2$ restent sensiblement perpendiculaires au plan P.

Le troisième degré de liberté est une rotation autour de l'axe Xa, respectivement Xb, situé dans le plan de la pince P et perpendiculaire à l'axe Z. Il est à remarquer que contrairement aux deux degrés de liberté précédents, l'axe autour duquel s'effectue ce degré de liberté est fixe, quel que soit l'effort exercé sur les plaques de contact 18, car l'axe de rotation est relié rigidement au support fixe.

A chaque degré de liberté sont associés des capteurs de mesures. Dans l'exemple décrit, ces capteurs sont des caoutchoucs conducteurs disposés de part et d'autre de déplacement du degré de liberté.

On a représenté sur la figure 4 une vue en perspective de l'un des deux doigts qui entrent dans le dispositif de préhension de l'invention. Ce doigt est constitué par un support rigide 22 qui comporte un orifice de fixation 23 par lequel le support 22 est fixé à l'extrémité du manipulateur. Le manipulateur (non représenté) communique le déplacement du support 22 parallèlement à l'axe Z qui permet de serrer l'objet à manipuler. Une fois l'objet serré entre les deux plaques 18 (voir fig. 3), les opérations désirées peuvent être effectuées.

La structure articulée 20 qui comporte trois degrés de liberté est constituée par un palier 24 monté pivotant autour d'un axe 26 solidaire du support rigide 22, comme on peut le voir sur la figure 5. Ce palier peut être un palier de type quelconque. Dans l'exemple de réalisation décrit, il s'agit d'un palier constitué de deux roulements obliques 28. Un doigt plan 30 est fixé à l'extérieur du palier 24. Deux caoutchoucs 32 sont disposés de part et d'autre de ce doigt 30 à l'intérieur d'une fourchette constituée par deux parois 34 solidaires du support rigide 22. Les deux caoutchoucs limitent ainsi la rotation du palier 24 autour de l'axe X. Lorsqu'un couple est exercé sur le palier 24, il est transmis par l'intermédiaire du doigt 30 aux caoutchoucs 32. L'un de ces caoutchoucs est comprimé tandis que l'autre est détendu. Chaque caoutchouc délivre une information qui est liée à sa déformation. On obtient ainsi deux informations qui permettent de déduire l'effort exercé sur les caoutchoucs 32 et par suite, le couple exercé sur le palier 24. Un capteur pouvant convenir pour cette utilisation est décrit dans le brevet français 2 330 996 déposé le 5 novembre 1975 pour "capteur tactile". La rotation du palier 24 est fonction du couple exercé sur l'objet manipulé selon l'axe X. Mais elle est de toute manière limitée à 10°.

Un flasque 36 rectangulaire est solidaire du palier 24. Deux glissières verticales 38, par exemple des glissières à billes, sont aménagées sur le flasque 36. Les glissières 38 permettent le déplacement vertical d'une table mobile 40 par rapport au flasque 36. On réalise ainsi le degré de liberté prismatique selon l'axe Y vertical. Deux caoutchoucs capteurs 42 sont disposés au-dessus et au-dessous de la table mobile 40. Ces caoutchoucs sont coincés entre la table mobile et deux ailes 44 du flasque 36. La course de la table 40 est faible, par exemple limitée à 3 mm. Les deux caoutchoucs 42 fournissent un signal différentiel qui est lié au déplacement de la table mobile 40 et par conséquent à l'effort exercé selon un axe vertical sur cette table mobile. On en déduit ainsi la composante verticale de l'effort exercé sur l'objet à manipuler. Toutefois, comme on le verra ultérieurement, le découplage de cette translation n'est pas parfait. Mais il est facile de remédier à cet inconvénient.

Le dispositif comporte un troisième degré de liberté qui est une rotation autour de l'axe $Z_1$. Cette rotation est réalisée par deux demi-axes 46 qui permettent le pivotement de la plaque de contact 18 par rapport à la table mobile 40. Deux caoutchoucs capteurs 48 sont disposés entre la table mobile 40 et la plaque 18 au-dessus et au-dessous de l'axe $Z_1$. Seul le caoutchouc inférieur 48 a été représenté sur la figure 4. Lorsque la plaque 18 pivote autour de l'axe $Z_1$, les deux caoutchoucs sont déformés en sens inverse. L'un est comprimé, l'autre détendu. Comme dans le cas des degrés de liberté précédents, les deux caoutchoucs 48 fournissent un signal différentiel directement lié à la rotation de la plaque de contact 18 autour de l'axe $Z_1$.

Il est à remarquer que dans l'exemple de réalisation qui vient d'être décrit, il y a couplage du mouvement de translation selon l'axe vertical Y, donné par les deux glissières 38, avec l'angle de rotation de la plaque de contact 18 autour de l'axe $Z_1$. Cela signifie qu'une rotation de la plaque 18 autour de l'axe $Z_1$ a pour conséquence un déplacement de la table mobile 40 relativement au flasque 36. En effet, au cours de cette rotation, le centre de prise de l'objet C, c'est-à-dire le centre de l'objet manipulé, reste fixe, puisqu'il s'agit d'une rotation pure. La rotation de la plaque mobile entraîne donc un décalage de la table mobile 40 par rapport au flasque 36, décalage qui est fonction de l'angle de rotation de la plaque 18 ainsi que de la distance qui sépare le centre de prise C de l'axe $Z_1$. Plus précisément, si l'on appelle $\Delta$ la rotation de la plaque de contact 18 autour de l'axe $Z_1$, nous avons

$$\text{tangente } \Delta = \frac{\Delta Y}{L}$$

en appelant L la distance qui sépare le centre de prise de l'axe $Z_1$. Toutefois, comme $\Delta$ est faible (inférieur à 10°), $\Delta Y$ est égal à $L\Delta$.

Par conséquent, il est aisé de découpler le mouvement de translation selon Y. Il suffit pour cela de retirer au signal donné par les capteurs 42 une quantité $L \cdot \Delta$. Cette soustraction peut être effectuée très simplement par un dispositif électronique facile à réaliser et qui ne sera par conséquent pas décrit.

On a représenté sur la figure 7 un autre mode de réalisation de l'invention qui comporte un degré de liberté de plus que le mode représenté sur les figures 3 à 6. Ce degré de liberté supplémentaire est une translation selon un axe Z'a parallèle à l'axe principal de la pince. Il est réalisé par deux glissières horizontales 60 représentées schématiquement sur la figure 7.

Ces glissières horizontales sont disposées entre la rotation autour de l'axe X et la translation selon l'axe Y. Ce qui a été dit de la translation selon l'axe Y s'applique à la translation selon l'axe Z. En particulier, la course est inférieure à 3 mm. Deux caoutchoucs conducteurs disposés de part et d'autre de la table mobile fournissent un signal différentiel lié au déplacement de cette table et par conséquent à l'effort exercé sur l'objet à manipuler selon la direction de l'axe Z.

## Revendications

1. Dispositif de préhension à mesure d'effort destiné à être fixé à l'extrémité d'un bras de manipulateur (8), ledit dispositif comprenant deux doigts (14a, 14b) déplaçables pour serrer un objet à manipuleur et des moyens pour mesurer l'effort exercé par un obstacle sur cet objet, caractérisé en ce que chaque doigt comporte un support (16), un axe (26) fixé au support (16) et présentant un axe géométrique perpendiculaire audit support, un palier (24) monté de manière pivotante sur l'axe (26), un flasque (36) solidaire du palier (24), une table (40) mobile en translation par rapport au flasque (36) parallèlement au plan de ce flasque et une plaque de contact (18) adaptée à entrer en contact avec un objet à manipuler et montée de manière pivotante par rapport à la table mobile (40) autour d'un axe perpendiculaire à l'axe géométrique de l'axe (26), un premier capteur de mesure de déplacement (32) interposé entre ledit support (16) et ledit palier (24) pour délivrer une information liée au mouvement de rotation dudit palier (24) autour de l'axe (26), un second capteur de mesure de déplacement (42) interposé entre ledit flasque (36) et la table mobile (40) pour délivrer une information liée au mouvement relatif de translation de ladite table mobile (40) par rapport au flasque (36), et un troisième capteur de mesure de déplacement (48) interposé entre ladite table (40) et ladite plaque de contact (18) pour délivrer l'information liée au mouvement de rotation de ladite plaque de contact (18) autour de son axe.

2. Dispositif de préhension selon la revendication 1, caractérisé en ce que les capteurs (32, 42, 48) interposés entre le support (16) et le palier (24) le flasque (36) et la table mobile (40), la table mobile (40) et la plaque de contact (18), respectivement, sont constitués par des caoutchoucs capteurs (32, 42, 48) qui délivrent une information liée à leur déformation.

3. Dispositif selon la revendication 2, caractérisé en ce que deux caoutchoucs capteurs (32, 42, 48) sont interposés entre le support (16) et le palier (24), le flasque (36) et la table mobile (40), la table mobile (40) et la plaque de contact (18), respectivement, les deux caoutchoucs capteurs étant opposés par rapport au déplacement dudit palier (24), de la table mobile (40), et de la plaque de contact (18), respectivement, et fournissant un signal différentiel.

4. Dispositif de préhension selon la revendication 1, caractérisé en ce qu'il comporte en outre un quatrième degré de liberté, ce degré de liberté étant constitué par une translation selon un axe (Z'1, Z'2) parallèle à l'axe Z et situé entre la translation d'axe $Y_1$, $Y_2$ et la rotation autour de l'axe $X_1$, $X_2$, ce quatirème degré de liberté étant constitué par deux glissières d'axe perpendiculaire à l'axe de rotation $X_1$, $X_2$ et disposées entre la table mobile (40) et le flasque (36), un quatrième capteur de mesure de déplacement étant interposé entre lesdites deux glissières pour délivrer une information liée au déplacement d'une glissière par rapport à l'autre.

5. Dispositif selon l'une des revendications 3 et 4, dans lequel lesdits deux capteurs de mesure de déplacement sont disposés de part et d'autre de la table mobile (40).

6. Dispositif de préhension selon la revendication 4, dans lequel deux caoutchoucs capteurs sont interposés entre lesdites deux glissières (60) pour délivrer une information liée au mouvement de translation de ces glissières l'une par rapport à l'autre, les deux caoutchoucs capteurs étant disposés de part et d'autre des glissières (60).

7. Dispositif de préhension selon la revendication 3, caractérisé en ce qu'un doigt plat (30) est fixé au palier (24) réalisant la rotation autour de l'axe ($X_1$, $X_2$), les deux caoutchoucs capteurs (32) étant situés de part et d'autre de ce doigt (30).

8. Dispositif de préhension selon la revendication 1, comprenant un axe de symétrie principal Z, chaque doigt ayant un axe géométrique Za, Zb, lesdits doigts de déplaçant en restant parallèles à l'axe Z, le plan défini par les axes parallèles Za, Zb étant appelé plan de la pince P.

9. Dispositif de préhension selon la revendication 1, caractérisé en ce que l'on découple la translation selon la glissière d'axe $Y_1$, $Y_2$ en soustrayant au signal fourni par le capteur la quantité $L \cdot \Delta$, L étant la distance du centre de prise à l'axe $Z_1$, $Z_2$ et $\Delta$ l'angle de rotation de la plaque de contact (18) autour de l'axe $Z_1$, $Z_2$.

## Patentansprüche

1. Greifvorrichtung mit Greifkraftmeßsystem, die dazu vorgesehen ist, am Ende eines Manipulatorarms (8) befestigt zu werden, wobei die Vorrichtung zwei Finger (14a, 14b), die verstellbar sind, um ein zu manipulierendes Objekt zu ergreifen, und Einrichtungen zum Messen der Kraft, die von einem Hindernis auf dieses Objekt ausgeübt wird, aufweist, dadurch gekennzeichnet, daß jeder Finger einen Halter (16), eine Achse (26), die am Halter (16) befestigt ist und eine zum Halter senkrechte geometrische Achse beschreibt, ein auf der Achse (26) schwenkbar montiertes Lager (24), einen mit dem Lager (24) fest verbundenen Flansch (36), eine gegenüber dem Flansch (36) parallel zur Ebene dieses Flansches verschiebbar bewegliche Tafel (40) und eine Kontaktplatte (18) aufweist, die dazu eingerichtet ist, mit dem zu manipulierenden Objekt in Berührung zu gelangen und die gegenüber der beweglichen Tafel (40) um eine zur gemetrischen Achse der Achse (26) senkrechten Achse schwenkbar ist, einen ersten Verstellungsmeßaufnehmer (32), der zwischen dem genannten Halter (16) und dem genannten Lager (24) angeordnet ist, um eine Information zu liefern, die der Drehbewegung des genannten Lagers (24) um die Achse (26) zugeordnet ist, einen zweiten Verstellungsmeßaufnehmer (42), der zwischen dem genannten Flansch (36) und der beweglichen Tafel (40) angeordnet ist, um eine Information zu liefern, die auf die relative Verschiebebewegung der genannten beweglichen Tafel (40) gegenüber dem Flansch (36) bezogen ist, und einen dritten Verstellungsmeßaufnehmer (48), der zwischen der genannten Tafel (40) und der Kontaktplatte (18) angeordnet ist, um eine Information zu liefern, die auf die Drehbewegung der genannten Kontaktplatte (18) um ihre Achse bezogen ist.

2. Greifvorrichtung nach Anspruch 1, dadurch gekennzeichnet, daß die Aufnehmer (32, 42, 48), die zwischen dem Halter (16) und dem Lager (24) bzw. dem Flansch (36) und der beweglichen Tafel (40) bzw. der beweglichen Tafel (40) und der Kontaktplatte (18) angeordnet sind, von Gummiaufnehmern (32, 42, 48) gebildet sind, die eine auf ihre Deformation bezogene Information liefern.

3. Vorrichtung nach Anspruch 2, dadurch gekennzeichnet, daß die zwei Gummiaufnehmer (32, 42, 48) zwischen dem Halter (16) und dem Lager (24) bzw. dem Flansch (36) und der beweglichen Tafel (40) bzw. der beweglichen Tafel (40) und der Kontaktplatte (18) angeordnet sind, wobei die zwei Gummiaufnehmer in bezug auf die Verstellung des genannten Lagers (24), der beweglichen Tafel (40) bzw. der Kontaktplatte (18) einander gegenüberstehen und ein Differenzsignal liefern.

4. Greifvorrichtung nach Anspruch 1, dadurch gekennzeichnet, daß sie weiterhin einen vierten Freiheitsgrad aufweist, wobei dieser Freiheitsgrad von einer Längsbewegung längs einer Achse ($Z'1$, $Z'2$) parallel zur Achse Z und zwischen der Verschiebungsachse $Y_1$, $Y_2$ und der Drehung um die Achse $X_1$, $X_2$ liegend gebildet ist, wobei dieser vierte Freiheitsgrad von zweit Gleitschienen mit zur Drehachse $X_1$, $X_2$ senkrechter Achse gebildet ist, die zwischen der beweglichen Tafel (40) und dem Flansch (36) angeordnet sind, wobei ein vierter Verstellungsmeßaufnehmer zwischen den zwei Gleitschienen angeordnet ist, um eine Information zu liefern, die auf die Verstellung der einen Gleitschiene gegenüber der anderen bezogen ist.

5. Vorrichtung nach einem der Ansprüche 3 und 4, bei der die genannten zwei Verstellungsmeßaufnehmer beiderseits der beweglichen Tafel (40) angeordnet sind.

6. Greifvorrichtung nach Anspruch 4, bei der die zwei Gummiaufnehmer zwischen den zwei Gleitschienen (60) angeordnet sind, um eine Information zu liefern, die auf die Verschiebebewegung dieser Gleitschienen gegeneinander bezogen ist, wobei die beiden Gummiaufnehmer beiderseits der Gleitschienen (60) angeordnet sind.

7. Greifvorrichtung nach Anspruch 3, dadurch gekennzeichnet, daß ein flacher Finger (30) am Lager (24), das die Drehung um die Achse ($X_1$, $X_2$) ausführt, befestigt ist, wobei die zwei Gummiaufnehmer (32) zu beiden Seiten dieses Fingers (30) gelegen sind.

8. Greifvorrichtung nach Anspruch 1, enthaltend eine Hauptsymmetrieachse (Z), wobei jeder Finger eine geometrische Achse Za, Zb hat, die genannten Finger sich, parallel zur Achse Z verbleibend, verstellen, wobei die von den parallelen Achsen Za, Zb definierte Ebene die Greifebene P genannt wird.

9. Greifvorrichtung nach Anspruch 1, dadurch gekennzeichnet, daß man die Verschiebung längs der Gleitschiene von der Achse $Y_1$, $Y_2$ entkoppelt, wobei man vom Signal, das von dem Aufnehmer geliefert wird, die Menge $L \cdot \Delta$ abzieht, wobei L die Distanz vom Greifzentrum zur Achse $Z_1$, $Z_2$ und $\Delta$ die Winkeldrehung der Kontaktplatte (18) um die Achse $Z_1$, $Z_2$ ist.

**Claims**

1. Gripper having force-measurement means adapted to be fixed to the end of a manipulator arm (8), said gripper comprising two fingers (14a, 14b) mutually displaceable to grip an object to be manipulated, and means for measuring the force exerted by an obstacle on said object, characterized in that each finger comprises a support (16), an axle (26) fixed to the support (16) and having a geometric axis perpendicular to said support, a bearer (24) pivotally mounted on the axle (26), an end plate (36) fixed with respect to the bearer (24), a body member (40) movable in translation with respect to the end plate (36) parallel to the plane of the end plate and a contact plate (18) adapted to enter into contact with an object to be manipulated and pivotally mounted with respect to the movable body member (40) around an axis perpendicular to the geometric axis of the axle (26), a first displacement sensor (32) interposed between said support (16) and said bearer (24) to deliver data relating to rotational movement of said bearer (24) around the axle (26), a second displacement sensor (42) interposed between the end plate (36) and the movable body member (40) to deliver data relating to relative translational movement of said movable body member (40) with respect to the end plate (36), and a third displacement sensor (48) interposed between said body member (40) and said contact plate (18) to deliver data relating to rotational movement of said contact plate (18) around its axis.

2. Gripper according to Claim 1, characterized in that the sensors (32, 42, 48) respectively interposed between the support (16) and the bearer (24), between the end plate (36) and the movable body member (40) and between the movable body member (40) and the contact plate (18), are constituted by elastic sensors (32, 42, 48) which deliver data relating to their deformation.

3. Gripper according to Claim 2, characterized in that two elastic sensors (32, 42, 48) are respectively interposed between the support (16) and the bearer (24), between the end plate (36) and the movable body member (40), and between the movable body member (40) and the contact plate (18), the two elastic sensors being opposed in relation to respective displacement of said bearer (24), the movable body member (40), and the contact plate (18), and providing a differential signal.

4. Gripper according to Claim 1, characterized in that it additionally comprises a fourth degree of freedom, said degree of freedom being constituted by translation along an axis (Z'1, Z'2) parallel to axis Z and located between translation along axis $Y_1$, $Y_2$, and rotation around axis $X_1$, $X_2$, said fourth degree of freedom being provided by two slides having axes perpendicular to the axis of rotation $X_1$, $X_2$ and located between the movable body member (40) and the end plate (36), a fourth displacement sensor being interposed between said two slides to deliver data relating to displacement of one slide with respect to the other.

5. Gripper according to either of Claims 3 and 4, in which said two displacement sensors are located on respective sides of the movable body member (40).

6. Gripper according to Claim 4, in which two elastic sensors are interposed between said two slides (60) to deliver data relating to translational movement of these slides with respect to one another, the elastic sensors being disposed on respective sides of the slides (60).

7. Gripper according to Claim 3, characterized in that a flat finger (30) is fixed to the bearer (24) providing rotation around the axis ($X_1$, $X_2$), the two elastic sensors (32) being located on respective sides of said finger (30).

8. Gripper according to Claim 1, having a main axis of symmetry Z, each finger having a geometric axis Za, Zb, said fingers being displaceable while remaining parallel to the axis Z, the plane defined by the parallel axes Za, Zb being termed the jaw plane P.

9. Gripper according to Claim 1, characterized in that translation of axis $Y_1$, $Y_2$ along the axis is uncoupled by subtracting the quantity $L \cdot \Delta$ from the signal provided by the sensor, L, being the distance of the centre of the object to be held from the axis $Z_1$, $Z_2$, and $\Delta$ being the angle of rotation of the contact plate (18) around axis $Z_1$, $Z_2$.

FIG.1

FIG.2

FIG.3

FIG.7

FIG.5

FIG.4

FIG.6